# EUROPEAN PATENT SPECIFICATION

(11) **EP 3 872 895 B1**
(45) Date of publication and mention of the grant of the patent: **04.11.2026**
(21) Application number: 19877397.0
(22) Date of filing: 12.09.2019
(51) Int. Cl.: H01M 4/04, H01M 4/139, B05C 13/02, H01G 11/06, H01G 11/50, H01G 11/86, H01G 13/00, B05C 3/132

(54) **ELECTRODE MANUFACTURING DEVICE AND ELECTRODE MANUFACTURING METHOD**
ELEKTRODENHERSTELLUNGSVORRICHTUNG UND ELEKTRODENHERSTELLUNGSVERFAHREN
DISPOSITIF DE FABRICATION D'ÉLECTRODE ET PROCÉDÉ DE FABRICATION D'ÉLECTRODE

(30) Priority: 24.10.2018 JP 2018200085
(43) Date of publication of application: 01.09.2021
(73) Proprietor: Musashi Energy Solutions Co., Ltd., Hokuto-shi, Yamanashi 409-1501 (JP)
(72) Inventor: IWAZAKI, Tomoya, Hokuto-shi, Yamanashi 409-1501 (JP); NANSAKA, Kenji, Hokuto-shi, Yamanashi 409-1501 (JP); OTANI, Shinya, Hokuto-shi, Yamanashi 409-1501 (JP); AKIYAMA, Kazuhide, Hokuto-shi, Yamanashi 409-1501 (JP); NAOI, Masaya, Tokyo 105-8640 (JP); AITA, Kazunari, Tokyo 105-8640 (JP)
(74) Representative: TBK
(86) International application number: PCT/JP2019/035896
(87) International publication number: WO 2020/084949

(56) References cited:
- WO-A1-2017/047030
- WO-A1-2017/146223
- WO-A1-2018/088311
- JP-A- 2008 077 963
- JP-A- 2008 077 963
- US-A1- 2008 073 217

## Description

### CROSS-REFERENCE TO RELATED APPLICATION

This international application claims the benefit of Japanese Patent Application No. 2018-200085 filed on October 24, 2018 with the Japan Patent Office.

### TECHNICAL FIELD

The present disclosure relates to an electrode manufacturing apparatus and an electrode manufacturing method.

### BACKGROUND ART

In recent years, as the size and weight of electronic devices have been remarkably reduced, demands for downsizing and weight reduction have been further increased also for batteries used as power sources for driving the electronic devices.

In order to satisfy the demands for downsizing and weight reduction, nonaqueous electrolyte rechargeable batteries, typified by lithium ion rechargeable batteries, have been developed. Further, lithium ion capacitors have been known as power storage devices adapted for applications that require high energy density characteristics and high output characteristics. In addition, sodium ion type batteries and capacitors using sodium which is lower in cost and richer in resources than lithium have also been known.

In such batteries and capacitors, a process of doping an electrode with alkali metal in advance (generally referred to as pre-doping) has been adopted for various purposes. For example, there is a continuous type method for pre-doping an electrode with alkali metal. In the continuous type method, pre-doping is performed while a strip-shaped electrode plate is transferred in an electrolytic solution. The continuous type method is disclosed in Patent Documents JP H10-308212 A, JP 2008-077963 A, JP 2012-049543 A, and JP 2012-049544 A.

Furthermore, WO 2017/146223 A1 discloses a doping system, in which an active material in a strip-shaped electrode precursor having a layer including an active material is doped with alkali metal. The doping system includes a doping tank, a conveying unit, a counter electrode unit, a connection unit, and a porous insulating member. The doping tank accommodates a solution including alkali metal ions. The conveying unit conveys the electrode precursor along a path passing through the inside of the doping tank. The counter electrode unit is accommodated in the doping tank. The connection unit electrically connects the electrode precursor and the counter electrode unit. The porous insulating member is disposed between the electrode precursor and the counter electrode unit, and is not in contact with the electrode precursor. Further prior art is known from US 2008/073217 A1.

### SUMMARY OF THE INVENTION

### PROBLEMS TO BE SOLVED BY THE INVENTION

In the strip-shaped electrode plate, there may be a portion where an active material layer is not formed and a base material is exposed (hereinafter, referred to as a base material exposed portion). Pre-doping the base material exposed portion causes precipitation of alkali metal on the base material. Alkali metal precipitated on the base material causes various problems.

Further, pre-doping may be performed after the strip-shaped electrode plates are joined together. A portion where the strip-shaped electrode plates are joined (hereinafter, referred to as a joint portion) has high resistance. Pre-doping the joint portion causes increase in resistance heat generation. Increase in resistance heat generation causes increase in temperature of the electrolyte solution, which causes variations in results of pre-doping.

In one aspect of the present disclosure, it is desirable to provide an electrode manufacturing apparatus and an electrode manufacturing method that can restrain pre-doping of part of an electrode.

### MEANS FOR SOLVING THE PROBLEMS

One aspect of the present disclosure provides an electrode manufacturing apparatus that manufactures a strip-shaped doped electrode by doping active material contained in a layer of a strip-shaped electrode precursor with alkali metal. The electrode manufacturing apparatus comprises: a sensor configured to detect a mark that the electrode precursor has; at least one doping tank that stores a solution containing alkali metal ions; a conveyer member configured to convey the electrode precursor along a path that passes through the doping tank, a counter electrode member that is accommodated in the doping tank, a connector configured to electrically connect the electrode precursor and the counter electrode member, a power source configured to flow an electric current to the counter electrode member via the connector, a power controller configured to control the power source based on a result of detection by the sensor, assemblies each comprising the doping tank, the counter electrode member, the connector, and the power source, wherein the power controller is configured to control the power source for each of the assemblies. The power controller is configured to control a timing to turn on/off the power source based on the result of detection by the sensor and the conveying speed of the electrode precursor.

The electrode manufacturing apparatus in one aspect of the present disclosure uses a sensor to detect a mark that the electrode precursor has. The electrode manufacturing apparatus in one aspect of the present disclosure controls the power source based on the result of detection of the mark. Thus, the electrode manufacturing apparatus in one aspect of the present disclosure can restrain pre-doping of part of the electrode precursor that is in a specific positional relationship with the mark.

Another aspect of the present disclosure provides an electrode manufacturing method for manufacturing a strip-shaped doped electrode by doping an active material contained in a layer of a strip-shaped electrode precursor with alkali metal. The electrode manufacturing method comprises: conveying the electrode precursor along a path passing through at least one doping tank that stores a solution containing alkali metal ions and accommodates a counter electrode member; electrically connecting the electrode precursor and the counter electrode member; flowing an electric current to the counter electrode member via the connector using a power source; detecting a mark that the electrode precursor has using a sensor; and controlling the power source based on a result of detection by the sensor. A timing to turn on/off the power source is controlled based on the result of detection by the sensor and a conveying speed of the electrode precursor.

The electrode manufacturing method in another aspect of the present disclosure, a sensor is used to detect the mark that the electrode precursor has. In the electrode manufacturing method of another aspect of the present disclosure, the power source is controlled based on the result of detection of the mark. Thus, according to the electrode manufacturing method of another aspect of the present disclosure, pre-doping of part of the electrode precursor that is in a specific positional relationship with the mark can be restrained.

### BRIEF DESCRIPTION OF THE DRAWINGS

FIG 1 is an explanatory view showing a configuration of an electrode manufacturing apparatus.
FIG 2 is an explanatory view showing a state in which an electrolyte solution tank is moved downward.
FIG 3 is an explanatory diagram showing an electrical configuration of the electrode manufacturing apparatus.
FIG 4 is a side sectional view showing a configuration of counter electrode members and a porous insulating member.
FIG 5 is a plan view showing a configuration of an electrode precursor.
FIG 6 is a sectional view taken along a cross-section VI-VI in FIGS. 5 and 8.
FIG 7 is a flowchart showing a process executed by a power controller.
FIG 8 is a plan view showing a configuration of the electrode precursor of another embodiment.

### EXPLANATION OF REFERENCE NUMERALS

1...electrode manufacturing apparatus, 7, 203, 205, 207...electrolyte solution tank, 9, 11, 13, 15, 17, 19, 21, 23, 25, 27, 29, 31, 305, 307, 109, 311,
313, 315, 317, 119, 321, 323, 33, 35, 37, 39, 41, 43, 45...conveyer roller, 47... supply roll, 49... winding roll, 51, 52, 54...counter electrode member, 53...porous insulating member, 55...supporting table, 57...circulation filter, 61, 62, 64...direct current power source, 63...blower, 65...sensor, 66...power controller, 67, 68, 70...supporting rod, 69...partition plate, 71...space, 73...electrode precursor, 75...electrode, 77...conductive base material, 79... alkali metal containing plate, 81...filter, 83...pump, 85...piping, 87, 89, 91, 93, 97, 99...cable, 93...current collector, 95...active material layer, 101...CPU, 103...cleaning tank, 105... memory, 107...mark, 107A...front mark, 107B...rear mark, 111...mark target part

### MODE FOR CARRYING OUT THE INVENTION

Example embodiments of the present disclosure will be described with reference to the drawings.

### <First Eembodiment>

### 1. Configuration of Electrode Manufacturing Apparatus 1

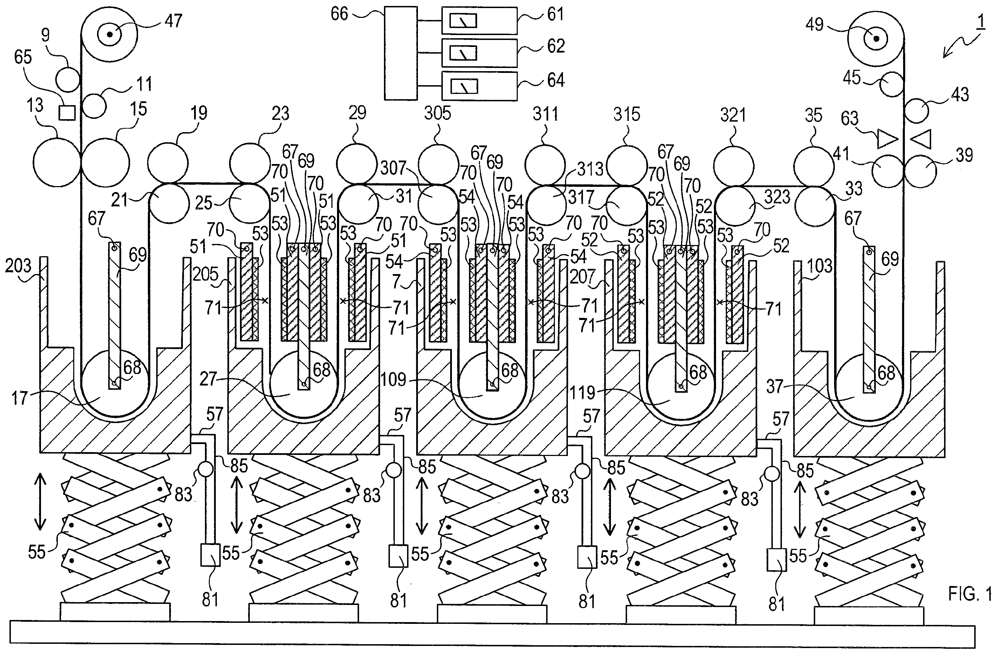

The configuration of an electrode manufacturing apparatus 1 will be described based on FIGS. 1 to 4. As shown in FIG. 1, the electrode manufacturing apparatus 1 comprises electrolyte solution tanks 203, 205, 7, 207, a cleaning tank 103, conveyer rollers 9, 11, 13, 15, 17, 19, 21, 23, 25, 27, 29, 31, 305, 307, 109, 311, 313, 315, 317, 119, 321, 323, 33, 35, 37, 39, 41, 43, 45 (hereinafter also collectively referred to as a conveyer roller group), a supply roll 47, a winding roll 49, counter electrode members 51, 52, 54, a porous insulating member 53, a supporting table 55, a circulation filter 57, three direct current power sources 61, 62, 64, a blower 63, a sensor 65, and a power controller 66. The electrolyte solution tanks 205, 7, 207 correspond to doping tanks. The conveyer roller group corresponds to a conveyer member.

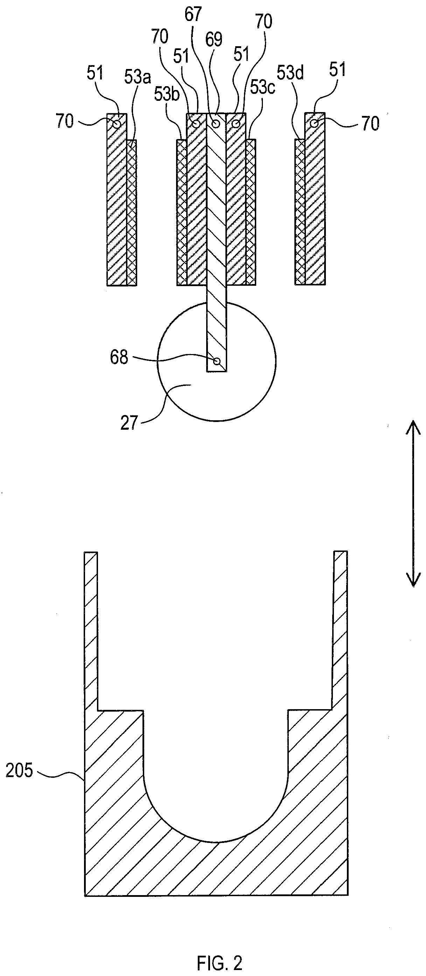

The electrolyte solution tank 205, as shown in FIGS. 1 and 2, is a rectangular tank with an open top. The bottom surface of the electrolyte solution tank 205 has an approximately U-shaped cross-section. In the electrolyte solution tank 205, there are a partition plate 69, four counter electrode members 51, four porous insulating members 53, and the conveyer roller 27. As shown in FIG. 2, the four porous insulating members 53 include 53a, 53b, 53c, and 53d.

The partition plate 69 is supported by a supporting rod 67 penetrating the upper end of the partition plate 69. The supporting rod 67 is secured to a wall and the like, which is not shown. The partition plate 69, except for the upper end thereof, is located inside the electrolyte solution tank 3. The partition plate 69 extends in an up-down direction and divides the interior of the electrolyte solution tank 205 into two spaces. The conveyer roller 27 is attached to the lower end of the partition plate 69. The partition plate 69 and the conveyer roller 27 are supported by the supporting rod 68 penetrating the partition plate 69 and the conveyer roller 27. The partition plate 69 is notched in the vicinity of the lower end thereof so as not to contact the conveyer roller 27. There is a space between the conveyer roller 27 and the bottom surface of the electrolyte solution tank 205.

The four counter electrode members 51 are each supported by the corresponding supporting rods 70 penetrating the upper ends of the counter electrode members 51 and extend in the up-down direction. The supporting rods 70 are secured to a wall and the like, which is not shown. The counter electrode members 51, except for the upper ends thereof, are located inside the electrolyte solution tank 205. Two of the four counter electrode members 51 are disposed to hold the partition plate 69 from both sides. The remaining two counter electrode members 51 are disposed along the inner surface of the electrolyte solution tank 205.

As shown in FIG. 1, there are spaces 71 between the counter electrode members 51 disposed beside the partition plate 69 and the counter electrode members 51 disposed along the inner surface of the electrolyte solution tank 205. The counter electrode members 51 are connected to the positive pole of the direct current power source 61. The detailed configuration of the counter electrode members 51 will be described later.

The porous insulating members 53 are attached to the surfaces of the respective counter electrode members 51 on the sides of the spaces 71. The detailed configuration of the porous insulating member 53 will be described later.

The electrolyte solution tank 203 has basically the same configuration as that of the electrolyte solution tank 205. However, the counter electrode member 51 and the porous insulating member 53 do not exist in the electrolyte solution tank 203. In addition, there is a conveyer roller 17 in the electrolyte solution tank 203 in place of the conveyer roller 27. The conveyer roller 17 is substantially the same as the conveyer roller 27.

The electrolyte solution tank 7 has basically the same configuration as that of the electrolyte solution tank 205. However, there are four counter electrode members 54 and a conveyer roller 109 in the electrolyte solution tank 7 in place of the four counter electrode members 51 and the conveyer roller 27. The four counter electrode members 54 are substantially the same as the four counter electrode members 51. The conveyer roller 109 is substantially the same as the conveyer roller 27. The counter electrode members 54 are connected to the positive pole of the direct current power source 62.

The electrolyte solution tank 207 has the same configuration as that of the electrolyte solution tank 205. However, there are four counter electrode members 52 and a conveyer roller 119 in the electrolyte solution tank 207 in place of the four counter electrode members 51 and the conveyer roller 27. The four counter electrode members 52 are substantially the same as the four counter electrode members 51. The conveyer roller 119 is substantially the same as the conveyer roller 27. The counter electrode members 52 are connected to the positive pole of the direct current power source 64.

The cleaning tank 103 has the same configuration as that of the electrolyte solution tank 205. However, there are no counter electrode member 51 and porous insulating member 53 in the the cleaning tank 103. In addition, there is a conveyer roller 37 in the cleaning tank 103 in place of the conveyer roller 27. The conveyer roller 37 is substantially the same as the conveyer roller 27.

The conveyer rollers 25, 29, 307, 311, 317, 321 are made of a conductive material. Other conveyer rollers in the conveyer roller group, except for shaft portions thereof, are made of elastomer. The conveyer roller group conveys an electrode precursor 73, which will be described later, along a specific path. The path along which the conveyer roller group conveys the electrode precursor 73 extends from the supply roll 47, passes through the electrolyte solution tank 203, the electrolyte solution tank 205, the electrolyte solution tank 7, the electrolyte solution tank 207, and the cleaning tank 103 in this order, and reaches the winding roll 49.

A portion of the path passing through the electrolyte solution tank 203 first goes downward between the inner surface of the electrolyte solution tank 203 and the partition plate 69, then is changed in direction of movement to upward by the conveyer roller 17, and finally moves upward between the inner surface of the electrolyte solution tank 203 and the partition plate 69 facing the inner surface of the electrolyte solution tank 203.

A portion of the above-described path passing through the electrolyte solution tank 205 first goes downward through the space 71 between the porous insulating member 53 attached along the inner surface of the electrolyte solution tank 205 and the porous insulating member 53 beside the partition plate 69 facing the former porous insulating member 53, then is changed in direction of movement to upward by the conveyer roller 27, and finally moves upward through the space 71 between the porous insulating member 53 attached along the inner surface of the electrolyte solution tank 205 and the porous insulating member 53 beside the partition plate 69 facing the former porous insulating member 53.

A portion of the above-described path passing through the electrolyte solution tank 7 first goes downward through the space 71 between the porous insulating member 53 attached along the inner surface of the electrolyte solution tank 7 and the porous insulating member 53 beside the partition plate 69 facing the former porous insulating member 53, then is changed in direction of movement to upward by the conveyer roller 109, and finally moves upward through the space 71 between the porous insulating member 53 attached along the inner surface of the electrolyte solution tank 7 and the porous insulating member 53 beside the partition plate 69 facing the former porous insulating member 53.

A portion of the above-described path passing through the electrolyte solution tank 207 first goes downward through the space 71 between the porous insulating member 53 attached along the inner surface of the electrolyte solution tank 207 and the porous insulating member 53 beside the partition plate 69 facing the former porous insulating member 53, then is changed in direction of movement to upward by the conveyer roller 119, and finally moves upward through the space 71 between the porous insulating member 53 attached along the inner surface of the electrolyte solution tank 207 and the porous insulating member 53 beside the partition plate 69 facing the former porous insulating member 53.

A portion of the above-described path passing through the cleaning tank 103 first goes downward between the inner surface of the cleaning tank 103 and the partition plate 69, then is changed in direction of movement to upward by the conveyer roller 37, and finally goes upward between the inner surface of the cleaning tank 103 and the partition plate 69.

The supply roll 47 has the electrode precursor 73 wound around the outer circumference thereof. That is, the supply roll 47 holds the electrode precursor 73 in a wound state. The conveyer roller group draws out and conveys the electrode precursor 73 held by the supply roll 47.

The winding roll 49 winds up and keeps the electrode 75 conveyed by the conveyer roller group. The electrode 75 is manufactured by pre-doping the electrode precursor 73 with alkali metal in the electrolyte solution tanks 205, 7, 207. The electrode 75 corresponds to a doped electrode.

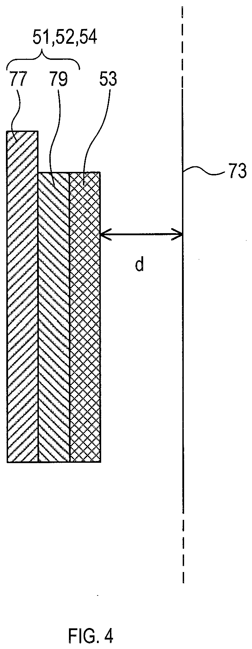

The counter electrode members 51, 52, 54 have a plate-like shape. As shown in FIG. 4, the counter electrode members 51, 52, 54 have a configuration in which a conductive base material 77 and an alkali metal containing plate 79 are stacked. Examples of the material for the conductive base material 77 include copper, stainless steel, and nickel. The form of the alkali metal containing plate 79 is not particularly limited, and examples thereof include an alkali metal plate and an alkali metal alloy plate. The thickness of the alkali metal containing plate 79 may be, for example, 0.03 mm to 3 mm.

The porous insulating members 53 have a plate-like shape. The porous insulating members 53, as shown in FIG. 4, are stacked on the alkali metal containing plate 79, and attached to the surfaces of the counter electrode members 51, 52, 54. The plate-like shape of the porous insulating members 53 is a shape when the porous insulating members 53 are attached to the surfaces of the counter electrode members 51, 52, 54. The porous insulating members 53 may be members that self maintains the given shape, or may be members, such as nets, that can be easily deformed.

As shown in FIG. 4, the porous insulating member 53 and the electrode precursor 73 conveyed by the conveyer roller group do not contact with each other. The shortest distance d from the surface of the porous insulating member 53 to the electrode precursor 73 is preferably in the range of 0.5 mm to 100 mm, and particularly preferably in the range of 1 mm to 10 mm. The shortest distance d is a distance between a point on the surface of the porous insulating member 53 that is closest to the electrode precursor 73 and the electrode precursor 73.

The porous insulating members 53 are porous. Accordingly, a dope solution, which will be described later, can pass through the porous insulating members 53. This allows the counter electrode members 51, 52, 54 to contact the dope solution.

An example of the porous insulating member 53 may be resin mesh. Examples of the resin include polyethylene, polypropylene, nylon, polyether ether ketone, and polytetrafluoroethylene. The aperture size of the mesh can be suitably set and may be, for example, 0.1 µm to 10 mm, and preferably in the range of 0.1 mm to 5 mm. The thickness of the mesh can be suitably set and may be, for example, 1 µm to 10 mm, and preferably in the range of 30 µm to 1 mm. The opening ratio of the mesh can be suitably set and may be, for example, 5% to 98%, preferably 5% to 95%, and more preferably in the range of 50% to 95%.

The porous insulating member 53 may be entirely made of an insulating material, or may partially comprise an insulating layer.

The supporting tables 55 support the electrolyte solution tanks 203, 205, 7, 207 and the cleaning tank 103 from below. The height of the supporting tables 55 can be changed. When the supporting table 55 supporting the electrolyte solution tank 205 is lowered while the positions of the partition plate 69, the counter electrode members 51, and the porous insulating member 53 in the up-down direction are maintained, the electrolyte solution tank 205 can be moved downward relative to the partition plate 69, the counter electrode members 51, and the porous insulating member 53, as shown in FIG. 2. When the supporting table 55 is raised, the electrolyte solution tank 205 can be moved upward relative to the partition plate 69, the counter electrode members 51, and the porous insulating member 53. The supporting tables 55 supporting the electrolyte solution tanks 203, 7, 207 and the cleaning tank 103 have the same function.

The circulation filter 57 is provided to the respective electrolyte solution tanks 203, 205, 7, 207. The circulation filter 57 comprises a filter 81, a pump 83, and a piping 85.

In the circulation filter 57 provided to the electrolyte solution tank 203, the piping 85 is a circulation piping that extends from the electrolyte solution tank 203, sequentially passes through the pump 83 and the filter 81, and returns to the electrolyte solution tank 203. The dope solution in the electrolyte solution tank 203 circulates in the piping 85 and the filter 81 and returns again to the electrolyte solution tank 203 due to the driving force of the pump 83. At this time, impurities and the like in the dope solution are filtered by the filter 81. The impurities include impurities precipitated from the dope solution, and impurities produced from the electrode precursor 73. Examples of the material for the filter 81 may include resin such as polypropylene and polytetrafluoroethylene. The pore diameter of the filter 81 can be suitably set and may be, for example, 30 µm to 50 µm.

The circulation filters 57 of the electrolyte solution tanks 205, 7, 207 have the same functions and effects. In FIGS. 1 and 2, illustration of the dope solution is omitted for convenience.

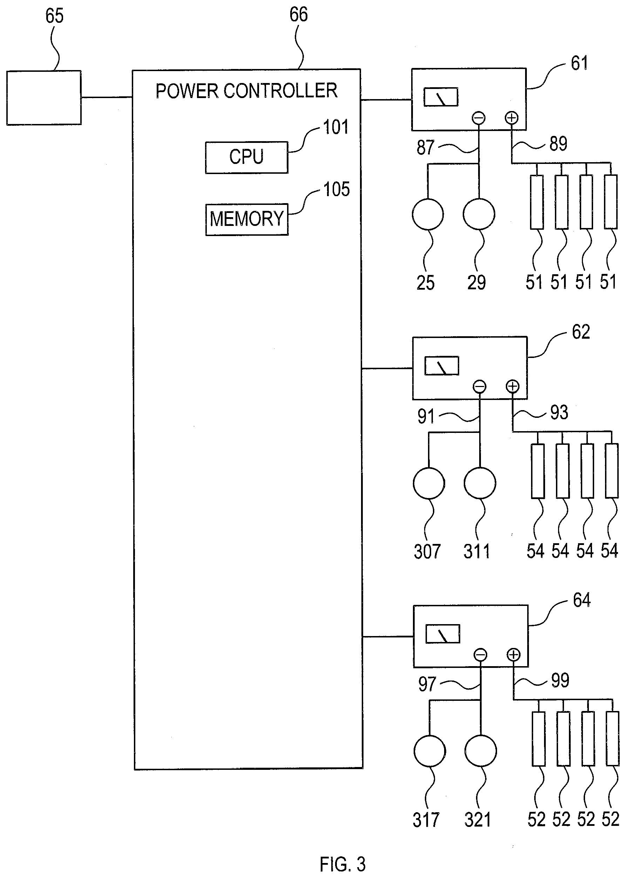

As shown in FIG. 3, the negative terminal of the direct current power source 61 is connected to each of the conveyer rollers 25, 29 via the cable 87. The positive terminal of the direct current power source 61 is connected to each of four counter electrode members 51 in total via the cable 89. The electrode precursor 73 contacts the conductive conveyer rollers 25, 29. The electrode precursor 73 and the counter electrode members 51 are inside the dope solution which is the electrolyte solution. Therefore, the electrode precursor 73 and the counter electrode members 51 are electrically connected.

The cables 87, 89, and the conveyer rollers 25, 29 correspond to connectors. The direct current power source 61 flows an electric current to the counter electrode members 51 via the cables 87, 89, and the conveyer rollers 25, 29.

As shown in FIG. 3, the negative terminal of the direct current power source 62 is connected to each of the conveyer rollers 307, 311 via the cable 91. The positive terminal of the direct current power source 62 is connected to each of four counter electrode members 54 in total via the cable 93. The electrode precursor 73 contacts the conductive conveyer rollers 307, 311. The electrode precursor 73 and the counter electrode members 54 are inside the dope solution which is the electrolyte solution. Therefore, the electrode precursor 73 and the counter electrode members 54 are electrically connected.

The cables 91, 93, and the conveyer roller 307, 311 correspond to the connectors. The direct current power source 62 flows an electric current to the counter electrode members 54 via the cables 91, 93, and the conveyer rollers 307, 311.

As shown in FIG. 3, the negative terminal of the direct current power source 64 is connected to each of the conveyer rollers 317, 321via the cable 97. The positive terminal of the direct current power source 64 is connected to each of four counter electrode members 52 in total via the cable 99. The electrode precursor 73 contacts the conductive conveyer rollers 317, 321. The electrode precursor 73 and the counter electrode members 52 are inside the dope solution which is the electrolyte solution. Therefore, the electrode precursor 73 and the counter electrode members 52 are electrically connected.

The cables 97, 99, and the conveyer rollers 317, 321 correspond to the connectors. The direct current power source 64 flows an electric current to the counter electrode members 52 via the cables 97, 99, and the conveyer rollers 317, 321.

The blower 63 blows gas to the electrode 75 coming out of the cleaning tank 103 to vaporize the cleaning solution, and dries the electrode 75. The gas to be used is preferably a gas inert with respect to the active material pre-doped with alkali metal. Examples of such a gas include helium gas, neon gas, argon gas, and dehumidified air from which water has been removed.

The sensor 65 is secured to a position on the upstream side of the electrolyte solution tank 203 in a conveying path of the electrode precursor 73. The sensor 65 can detect a mark of the electrode precursor 73. The mark will be described later. Examples of the sensor 65 include an image sensor and an infrared sensor.

As shown in FIG. 3, the power controller 66 is electrically connected to the direct current power sources 61, 62, 64 and the sensor 65. The power controller 66 is a microcomputer comprising a CPU 101, and a semiconductor memory (hereinafter, referred to as a memory 105) such as, for example, a RAM or a ROM.

### 2. Configuration of Electrode Precursor 73

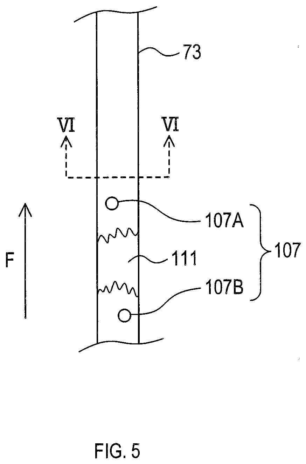

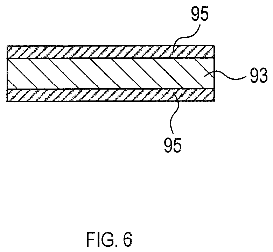

The configuration of the electrode precursor 73 will be described based on FIG. 5 and FIG. 6. The electrode precursor 73, as shown in FIG. 5, has a stripshape. As shown in FIG. 6, the electrode precursor 73 comprises a strip-shaped current collector 93, and an active material layer 95 formed on both sides of the current collector 93.

The current collector 93 is preferably a metal foil such as copper, nickel, and stainless steel. The current collector 93 may have a conductive layer, containing a carbon material as a main component, formed on the metal foil. The thickness of the current collector 93 can be, for example, 5 to 50 µm.

The active material layer 95 can be formed, for example, by preparing a slurry containing an active material and a binder before doped with alkali metal, applying the slurry onto the current collector 93, and drying the slurry.

Examples of the binder include rubber binders such as styrene-butadiene rubber (SBR) and NBR; fluorine resins such as polytetrafluoroethylene and polyvinylidene fluoride; polypropylene, polyethylene, and fluorine-modified (meth) acrylic binder as disclosed in Japanese Unexamined Patent Application Publication No. 2009-246137.

The slurry may contain other components, in addition to the active material and the binder. Examples of the other components include conductive agents such as carbon black, graphite, vapor-grown carbon fiber, and metal powder; and thickeners such as carboxymethyl cellulose, Na salt or ammonium salt thereof, methyl cellulose, hydroxymethyl cellulose, ethyl cellulose, hydroxypropyl cellulose, polyvinyl alcohol, oxidized starch, phosphorylated starch, and casein.

The thickness of the active material layer 95 is not particularly limited, and is, for example, 5 to 500 µm, preferably 10 to 200 µm, and particularly preferably 10 to 100 µm.

The active material included in the active material layer 95 is not particularly limited as long as it is an electrode active material that can be applied to a battery or a capacitor using insertion/desorption of alkali metal ions, and it may be a negative electrode active material or may be a positive electrode active material.

The negative electrode active material is not particularly limited, and includes, for example, a carbon material such as graphite, easily graphitizable carbon, hardly graphitizable carbon, complex carbon material in which graphite particles are coated by a carbide of pitch and resin; a material including a metal or a half-metal, or an oxide thereof such as Si, Sn and the like that can be alloyed with lithium, and the like. A specific example of the carbon material includes the carbon material described in Japanese Unexamined Patent Publication No. 2013-258392. A specific example of the material including a metal or a half-metal, or an oxide thereof that can be alloyed with lithium includes a material described in Japanese Unexamined Patent Publication No. 2005-123175 and Japanese Unexamined Patent Publication No. 2006-107795.

Examples of the positive electrode active material include transition metal oxides such as cobalt oxide, nickel oxide, manganese oxide, and vanadium oxide, and sulfur-based active materials such as a sulfur simple material and metal sulfide.

Both the positive electrode active material and the negative electrode active material may be formed by a single substance or by mixing two or more types of substances. The electrode manufacturing apparatus 1 of the present disclosure is suitable for pre-doping the negative active material with alkali metal. In particular, it is preferable that the negative electrode active material is a carbon material or a material including Si or an oxide thereof.

The alkali metal pre-doped to the active material is preferably lithium or sodium, and lithium is particularly preferable. When the electrode precursor 73 is used for manufacturing an electrode of a lithium-ion rechargeable battery, the active material layer 95 has a density of preferably 1.50 to 2.00 g/cc, and particularly preferably 1.60 to 1.90 g/cc.

As shown in FIG. 5, the electrode precursor 73 may have a mark 107. The mark 107 is provided in the vicity of such as a defective portion and a joint portion (hereinafter, referred to as mark target parts 111). The mark target part 111 is where pre-doping should be restrained.

The mark 107 can be attached, for example, by an operator. Examples of the mark 107 are a tape affixed to the electrode precursor 73 and a hole formed on the electrode precursor 73.

The defective portion is, for example, a base material exposed portion where the active material layer 95 is not formed. The joint portion is a portion where two current collectors 93 are joined together at their end portions.

The mark 107 comprises, for example, a front mark 107A and a rear mark 107B. The front mark 107A is provided at a position indicating a start position in a longitudinal direction of the mark target part 111. The rear mark 107B is provided at a position indicating an end position in the longitudinal direction of the mark target part 111. The start position in the longitudinal direction is on the foremost side in a conveying direction F of the electrode precursor 73. The end position in the longitudinal direction is on the rearmost side in the conveying direction F of the electrode precursor 73.

The front mark 107A and the rear mark 107B are provided at different positions in the width direction of the electrode precursor 73. Providing the front mark 107A and the rear mark 107B at different positions in the width direction of the electrode precursor 73 enables easy determination on which of the start position or the end position each of the front mark 107A and the rear mark 107B indicates.

Focusing on one point in the conveying path of the electrode precursor 73, the front mark 107A first passes that point, then the mark target part 111 passes that point, and finally the rear mark 107B passes that point.

### 3. Composition of Dope Solution

When the electrode manufacturing apparatus 1 is used, a solution containing alkali metal ions (hereinafter, referred to as a dope solution) is placed in the electrolyte solution tanks 203, 205, 7, 207.

The dope solution contains alkali metal ions and a solvent. An example of the solvent may be an organic solvent. The organic solvent is preferably an aprotic organic solvent. Examples of the aprotic organic solvent include ethylene carbonate, propylene carbonate, butylene carbonate, dimethyl carbonate, diethyl carbonate, methyl ethyl carbonate, 1-fluoroethylene carbonate, γ-butyrolactone, acetonitrile, dimethoxyethan, tetrahydrofuran, dioxolane, methylene chloride, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

Ionic solutions such as quaternary imidazolium salt, quaternary pyridinium salt, quaternary pyroridinium salt, and quaternary piperidinium salt can be also used as the organic solvent. The organic solvent may consist of a single component, or may be a mixed solvent containg two or more types of components.

The alkali metal ions contained in the above-described dope solution are ions that make up alkali metal salt. The alkali metal salt is preferably lithium salt or sodium salt. Examples of an anionic part making up the alkali salt include phosphorous anion including fluoro group such as PF₆⁻, PF₃(C₂F₅)₃⁻, and PF₃(CF₃)₃⁻; boron anion including fluoro group or cyano group such as BF₄⁻, BF₂(CF)₂⁻, BF₃(CF₃)⁻, and B(CN)₄⁻; sulfonyl imide anion including fluoro group such as N(FSO₂)₂⁻, N(CF₃SO₂)₂⁻, and N(C₂F₅SO₂)₂⁻; and organic sulfone acid anion including fluoro groups such as CF₃SO₃⁻.

The concentration of the alkali metal salt in the dope solution is preferably 0.1 mol/L or higher, and more preferably 0.5 to 1.5 mol/L. If the concentration of the alkali metal salt in the dope solution is within the above-described range, pre-doping with alkali metal efficiently progresses.

The dope solution may further contain an additive/additives such as vinylene carbonate, vinyl ethylene carbonate, 1-fluoroethylene carbonate, 1-(trifluoromethyl) ethylene carbonate, succinic anhydride, maleic anhydride, propanesultone, and diethyl sulfone.

The above-described dope solution may further contain a flame retardant such as a phosphazene compound. From the viewpoint of effectively controlling the thermal runaway reaction at the time of doping with alkali metal, the lower limit of the added amount of the flame retardant is preferably 1 part by mass or more, more preferably 3 parts by mass or more, and still more preferably 5 parts by mass or more, with respect to 100 parts by mass of the dope solution. From the viewpoint of obtaining a high-quality doped electrode, the upper limit of the added amount of the flame retardant is preferably 20 parts by mass or less, more preferably 15 parts by mass or less, and still more preferably 10 parts by mass or less, with respect to 100 parts by mass of the dope solution.

### 4. Manufacturing Method for Electrode 75 Using Electrode Manufacturing Apparatus 1

First, as a preparation for manufacturing the electrode 75, the following is performed. The electrode precursor 73 is wound around the supply roll 47. Next, the electrode precursor 73 is drawn out from the supply roll 47 by the conveying roller group, and is fed to the winding roll 49 along the above-mentioned path. Then, the electrolyte solution tanks 203, 205, 7, 207, and the cleaning tank 103 are raised and set in place shown in FIG. 1. The dope solution is placed in the electrolyte solution tanks 203, 205, 7, 207. The dope solution is as mentioned in "3. Composition of Dope Solution" described above. The cleaning solution is placed in the cleaning tank 103. The cleaning solution is an organic solvent. As a result, the spaces 71 of the electrolyte solution tanks 203, 205, 7, 207 are filled with the electrolytic solution. The space 71 of the cleaning tank 103 is filled with the cleaning solution.

Next, the electrode precursor 73 fed from the supply roll 47 to the winding roll 49 by the conveying roller group is drawn out from the supply roll 47 toward the winding roll 49, and conveyed along the above-mentioned path. When the electrode precursor 73 passes through the electrolyte solution tanks 205, 7, 207, the active material included in the active material layer 95 is pre-doped with alkali metal. However, as will be described later, when the electrode manufacturing apparatus 1 turns off any of the direct current power sources 61, 62, 64, pre-doping is not performed in the corresponding electrolyte solution tank.

By pre-doping the active material with the alkali metal, the electrode precursor 73 becomes the electrode 75. The electrode 75 is cleaned in the cleaning tank 103 while being conveyed by the conveying roller group. Finally, the electrode 75 is wound around the winding roll 49.

The electrode 75 manufactured using the electrode manufacturing apparatus 1 may be a positive electrode or a negative electrode. In the case of manufacturing a positive electrode, the electrode manufacturing apparatus 1 dopes the positive electrode active material with the alkali metal, and in the case of manufacturing a negative electrode, the electrode manufacturing apparatus 1 dopes the negative electrode active material with the alkali metal.

When lithium is occluded in the negative electrode active material of the lithium ion capacitor, the doping amount of the alkali metal is preferably 70 to 95% with respect to a theoretical capacity of the negative electrode active material. When lithium is occluded in the negative electrode active material of the lithium-ion rechargeable battery, the doping amount of the alkali metal is preferably 10 to 30% with respect to the theoretical capacity of the negative electrode active material.

### 5. Process Executed by Power Controller 66

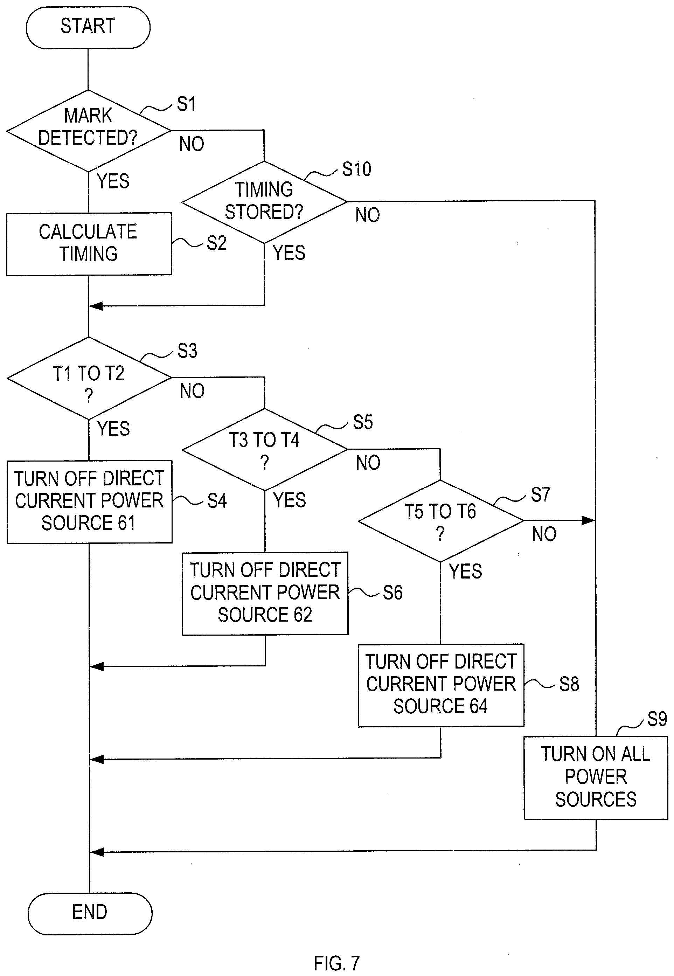

A process repeatedly executed by the power controller 66 will be described based on FIG. 7. The power controller 66 repeatedly executes the process at specified time intervals while the electrode 75 is manufactured using the electrode manufacturing apparatus 1.

In a step 1, the power controller 66 determines whether the front mark 107, and the rear mark 107B are detected using the sensor 65. When it is determined that the front mark 107A and the rear mark 107B are detected, the process proceeds to a step 2. When it is determined that the front mark 107A and the rear mark 107B are not detected, the process proceeds to a step 10.

In the step 2, the power controller 66 calculates the following timings T1 to T6.
T1: timing when the front mark 107A enters the electrolyte solution tank 205
T2: timing when the rear mark 107B comes out from the electrolyte solution tank 205
T3: timing when the front mark 107A enters the electrolyte solution tank 7
T4: timing when the rear mark 107B comes out from the electrolyte solution tank 7
T5: timing when the front mark 107A enters the electrolyte solution tank 207
T6: timing when the rear mark 107B comes out from the electrolyte solution tank 207

The power controller 66 calculates the timings T1 to T6 based on the timings when the sensor 65 detects the front mark 107A and the rear mark 107B and the conveying speed of the electrode precursor 73. The conveying speed of the electrode precursor 73 can be inputted to the power controller 66, for example, by the operator. Alternatively, the power controller 66 may acquire the conveying speed using such as a speed sensor. It is noted that distances from the sensor 65 to inlets of the electrolyte solution tanks 205, 7, 207 and distances from the sensor 65 to outlets of the electrolyte solution tanks 205, 7, 207 on the conveying path are known values, which are prestored in the memory 105.

The power controller 66 stores the calculated timings T1 to T6 in the memory 105. The power controller 66 erases the timings T1 to T6 from the memory 105 when the timing T6 elapses.

In a step 3, the power controller 66 determines whether the present time point is between the timing T1 and the timing T2. When it is determined that the present time point is between the timing T1 and the timing T2, the process proceeds to a step 4. When it is determined that the present time point is not between the timing T1 and the timing T2, the process proceeds to a step 5.

In the step 4, the power controller 66 turns off the direct current power source 61, and turns on the direct current power sources 62, 64.

In the step 5, the power controller 66 determines whether the present time point is between the timing T3 and the timing T4. When it is determined that the present time point is between the timing T3 and the timing T4, the process proceeds to a step 6. When it is determined that the present time point is not between the timing T3 and the timing T4, the process proceeds to a step 7.

In the step 6, the power controller 66 turns off the direct current power source 62, and turns on the direct current power sources 61, 64.

In the step 7, the power controller 66 determines whether the present time point is between the timing T5 and the timing T6. When it is determined that the present time point is between the timing T5 and the timing T6, the process proceeds to a step 8. When it is determined that the present time point is not between the timing T5 and the timing T6, the process proceeds to a step 9.

In the step 8, the power controller 66 turns off the direct current power source 64, and turns on the direct current power sources 61, 62.

In the step 9, the power controller 66 turns on all the direct current power sources 61, 62, 64.

In the step 10, the power controller 66 determines whether the timings T1 to T6 calculated in the previous step 1 are stored in the memory 105. When the timings T1 to T6 are stored in the memory 105, the process proceeds to the step 3. When the timings T1 to T6 are not stored in the memory 105, the process proceeds to the step 9.

### 6. Effect of Electrode Manufacturing Apparatus 1

(1A) The electrode manufacturing apparatus 1 controls the direct current power sources 61, 62, 64 based on the result of detection of the front mark 107A and the rear mark 107B by the sensor 65. Specifically, the electrode manufacturing apparatus 1 turns off the direct current power source 61 when the mark target part 111 is inside the electrolyte solution tank 205, turns off the direct current power source 62 when the mark target part 111 is inside the electrolyte solution tank 7, and turns off the direct current power source 64 when the mark target part 111 is inside the electrolyte solution tank 207. Thereby, the electrode manufacturing apparatus 1 can restrain pre-doping of the mark target part 111.
(1B) A configuration including a doping tank, a counter electrode member, a connector, and a power source is called an assembly hereinafter. The electrode manufacturing apparatus 1 comprises the following three assemblies.

First assembly: an assembly including the electrolyte solution tank 205, the counter electrode member 51, the cables 87, 89, the conveyer rollers 25, 29, and the direct current power source 61

Second assembly: an assembly including the electrolyte solution tank 7, the counter electrode member 54, the cables 91, 93, the conveyer rollers 307, 311, and the direct current power source 62

Third assembly: an assembly including the electrolyte solution tank 207, the counter electrode member 52, the cables 97, 99, the conveyer rollers 317, 321, and the direct current power source 64

The electrode manufacturing apparatus 1 can control the direct current power source in each of the assemblies. For example, the electrode manufacturing apparatus 1 can trun off one of the direct current power sources 61, 62, 64, and turn on the other two. This can restrain generation of a portion that is other than the mark target part 111 and that cannot be pre-doped with alkali metal in the electrode precursor 73, as compared to a case in which the direct current power sources 61, 62, 64 are simultaneously turned on or off.

(1C) The electrode manufacturing apparatus 1 controls current values in the direct current power sources 61, 62, 64 based on the result of detection by the sensor 65 and the conveying speed of the electrode precursor 73. This can more reliably restrain precipitation of lithium on the mark target part 111.

(1D) The electrode manufacturing apparatus 1 controls the timings to turn on/off the direct current power sources 61, 62, 64 based on the result of detection by the sensor 65 and the conveying speed of the electrode precursor 73. This can more reliably restrain precipitation of lithium on the mark target part 111.

### <Other Embodiments>

While an embodiment of the present disclosure has been described above, the present disclosure is not limited to the above-described embodiment, and can be implemented in variously modified forms.
(1) The mark 107 may be a single mark. In this case, the timings T1 to T6 can be defined as follows.
   T1: timing when the singl mark 107 reaches a position on the upstream side of the electrolyte solution tank 205 by a specified distance
   T2: timing when the single mark 107 reaches a position on the downstream side of the electrolyte solution tank 205 by a specified distance
   T3: timing when the single mark 107 reaches a position on the upstream side of the electrolyte solution tank 7 by a specified distance
   T4: timing when the single mark 107 reaches a position on the downstream side of the electrolyte solution tank 7 by a specified distance
   T5: timing when the single mark 107 reaches a position on the upstream side of the electrolyte solution tank 207 by a specified distance
   T6: timing when the single mark 107 reaches a position on the downstream side of the electrolyte solution tank 207 by a specified distance
(2) The sensor 65 may be provided at each of the position on the upstream side of the electrolyte solution tank 205, a position between the electrolyte solution tank 205 and the electrolyte solution tank 7, a position between the electrolyte solution tank 7 and the electrolyte solution tank 207, and the position on the downstream side of the electrolyte solution tank 207, in the conveying path of the electrode precursor 73.

In that case, the direct current power source 61 can be turned off from the timing when the sensor 65 provided at the position on the upstream side of the electrolyte solution tank 205 detects the mark 107 to the timing when the sensor 65 provided at the position between the electrolyte solution tank 205 and the electrolyte solution tank 7 detects the mark 107.

Also, the direct current power source 62 can be turned off from the timing when the sensor 65 provided at the position between the electrolyte solution tank 205 and the electrolyte solution tank 7 detects the mark 107 to the timing when the sensor 65 provided at the position between the electrolyte solution tank 7 and the electrolyte solution tank 207 detects the mark 107.

Also, the direct current power source 64 can be turned off from the timing when sensor 65 provided at the position between the electrolyte solution tank 7 and the electrolyte solution tank 207 detects the mark 107 to the timing when the sensor 65 provided at the position on the downstream side of the electrolyte solution tank 207 detects the mark 107.

(3) While the mark 107 passes through the electrolyte solution tank, electric current flowing to the counter electrode members in the electrolyte solution tank may be varied for each member. For example, electric current may not be supplied to two of the counter electrode members 51 facing the mark 107 among the four counter electrode members 51 of the electrolyte solution tank 205, and electric current may be supplied to the remaining two counter electrode members 51. The total amount of electric current supplied to the four counter electrode members 51 is half that of when the mark 107 is not inside the electrolyte solution tank 205.

This can further restrain generation of a portion that is other than the mark target part 111 and that cannot be doped with alkali metal in the electrode precursor 73.

(4) The timings T1 to T6 can be defined as appropriate. For example, T1 can be a timing when the front mark 107A reaches a position on the upstream side of the electrolyte solution tank 205 in the conveying path by a specified distance. The same applies to T2 to T6.

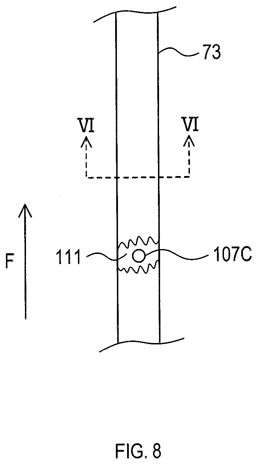

(5) As shown in FIG. 8, the mark 107 (hereinafter, referred to as a corresponding mark 107C) may be provided at a position corresponding to the mark target part 111 in the electrode precursor 73. The mark target part 111, for example, may be a portion where the layer containing the active material is not formed. The position corresponding to the mark target part 111 is, for example, a position overlapping at least part of the mark target part 111 in a longitudinal direction of the electrode precursor 73. The electrode manufacturing apparatus 1 can restrain pre-doping of a specified area around the corresponding mark 107C in the electrode precursor 73.

The electrode precursor 73 may have the front mark 107A, the rear mark 107B, and the corresponding mark 107C. For example, in a width direction of the electrode precursor 73, positions of the front mark 107A, the rear mark 107B, and the corresponding mark 107C differ from each other. In this way, the front mark 107, the rear mark 107B, and the corresponding mark 107C can be easily distinguished from one another.

(6) In each of the above-described embodiments, the mark is provided at the portion where the active material layer is formed, but it is not limited to this. For example, at least on one side in the width direction of the electrode precursor, a portion where the active material layer is not formed on the current collector and the current collector is exposed (hereinafter, referred to as an active material unformed tab portion) may be provided, and the mark may be provided at the active material unformed tab portion.

(7) A function of one element in each of the above-described embodiments may be shared by multiple elements, and functions of multiple elements may be performed by one element. A part of the elements in the above-described embodiments may be omitted. At least part of the elements in the above-described embodiments may be added to and/or replaced with another element in the above-described embodiments. Any and all modes encompassed by the technical thoughts specified by the language of the claims are embodiments of the present disclosure.

(8) The present disclosure can also be practiced in various forms, other than by the above-described electrode manufacturing apparatus. Examples of such forms are a system comprising the electrode manufacturing apparatus as a component, a program to cause a computer to function as the power controller, a non-transitory tangible storage medium, such as a semiconductor memory, in which this program is recorded, and a control method of a current value in the electrode manufacturing apparatus.

## Claims

1. An electrode manufacturing apparatus (1) that manufactures a strip-shaped doped electrode (75) by doping an active material contained in a layer (95) of a strip-shaped electrode precursor (73) with alkali metal, the electrode manufacturing apparatus (1) comprising:
a sensor (65) configured to detect a mark (107, 107A, 107B) that the electrode precursor (73) has;
at least one doping tank (7, 205, 207) that stores a solution that contains alkali metal ions;
a conveyer member (9, 11, 13, 15, 17, 19, 21, 23, 25, 27, 29, 31, 305, 307, 109, 311, 313, 315, 317, 119, 321, 323, 33, 35, 37, 39, 41, 43, 45) configured to convey the electrode precursor (73) along a path passing through the doping tank (7, 205, 207);
a counter electrode member (51, 52, 54) that is accommodated in the doping tank (7, 205, 207);
a connector (87, 89, 25, 29, 91, 93, 307, 311, 97, 99, 317, 321) configured to electrically connect the electrode precursor (73) and the counter electrode member (51, 52, 54);
a power source (61, 62, 64) configured to flow an electric current to the counter electrode member (51, 52, 54) via the connector (87, 89, 25, 29, 91, 93, 307, 311, 97, 99, 317, 321);
a power controller (66) configured to control the power source (61, 62, 64) based on a result of detection by the sensor (65); and
assemblies each comprising the doping tank (7, 205, 207), the counter electrode member (51, 52, 54), the connector (87, 89, 25, 29, 91, 93, 307, 311, 97, 99, 317, 321), and the power source (61, 62, 64), wherein
the power controller (66) is configured to control the power source (61, 62, 64) for each of the assemblies,
**characterized in that,**
the power controller (66) is configured to control a timing to turn on/off the power source (61, 62, 64) based on the result of detection by the sensor (65) and the conveying speed of the electrode precursor (73).

2. The electrode manufacturing apparatus (1) according to claim 1, wherein
the mark (107A, 107B) is provided at positions indicating a start position and an end position in a longitudinal direction of a portion of the electrode precursor (73) where the layer (95) containing the active material is not formed.

3. The electrode manufacturing apparatus (1) according to claim 2, wherein
the mark (107A) provided at the position indicating the start position and the mark (107B) provided at the position indicating the end position are provided at different positions in a width direction of the electrode precursor (73).

4. The electrode manufacturing apparatus (1) according to any one of claims 1 to 3, wherein
the mark (107, 107A, 107B) is provided to correspond to a portion of the electrode precursor (73) where the layer (95) containing the active material is not formed.

5. The electrode manufacturing apparatus (1) according to any one of claims 1 to 4, wherein
the conveyer member (9, 11, 13, 15, 17, 19, 21, 23, 25, 27, 29, 31, 305, 307, 109, 311, 313, 315, 317, 119, 321, 323, 33, 35, 37, 39, 41, 43, 45) comprises a conductive conveyer roller (25, 29, 307, 311, 317, 321), and
the conductive conveyer roller (25, 29, 307, 311, 317, 321) is part of the connector (87, 89, 25, 29, 91, 93, 307, 311, 97, 99, 317, 321).

6. The electrode manufacturing apparatus (1) according to any one of claims 1 to 5, wherein
the power controller (66) is configured to control a current value in the power source (61, 62, 64), based on the result of detection by the sensor (65) and a conveying speed of the electrode precursor (73).

7. An electrode manufacturing method for manufacturing a strip-shaped doped electrode (75) by doping an active material contained in a layer of a strip-shaped electrode precursor (73) with alkali metal, the electrode manufacturing method comprising:
conveying the electrode precursor (73) along a path passing through at least one doping tank (7, 205, 207) that stores a solution containing alkali metal ions and a counter electrode member (51, 52, 54);
electrically connecting the electrode precursor (73) and the counter electrode member (51, 52, 54);
flowing an electric current to the counter electrode member (51, 52, 54) via a connector (87, 89, 25, 29, 91, 93, 307, 311, 97, 99, 317, 321) using a power source (61, 62, 64);
detecting a mark (107, 107A, 107B) that the electrode precursor (73) has using a sensor (65); and
controlling the power source (61, 62, 64) based on a result of detection by the sensor (65),
**characterized in that,**
a timing to turn on/off the power source (61, 62, 64) is controlled based on the result of detection by the sensor (65) and a conveying speed of the electrode precursor (73).

8. The electrode manufacturing method according to claim 7, wherein
the doping tank (7, 205, 207) comprises the doping tanks (7, 205, 207),
the electrode precursor (73) is conveyed along the path sequentially passing through the doping tanks (7, 205, 207), and
the power source (61, 62, 64) is controlled for each of the doping tanks (7, 205, 207).

9. The electrode manufacturing method according to claim 7 or 8, wherein
the mark (107A, 107B) is provided at positions indicating a start position and an end position in a longitudinal direction of a portion of the electrode precursor (73) where the layer (95) containing the active material is not formed.

10. The electrode manufacturing method according to claim 9, wherein
the mark (107A) provided at the position indicating the start position and the mark (107B) provided at the position indicating the end position are provided at different positions in a width direction of the electrode precursor (73).

11. The electrode manufacturing method according to any one of claims 7 to 10, wherein
the mark (107, 107A, 107B) is provided to correspond to a portion of the electrode precursor (73) where the layer (95) containing the active material is not formed.

12. The electrode manufacturing method according to any one of claims 7 to 11, wherein
a conductive conveyer roller (25, 29, 307, 311, 317, 321) is used to convey the electrode precursor (73).

13. The electrode manufacturing method according to any one of claims 7 to 12, wherein
a current value in the power source (61, 62, 64) is controlled based on the result of detection by the sensor (65) and a conveying speed of the electrode precursor (73).

## Patentansprüche

1. Elektrodenherstellungsvorrichtung (1), die eine streifenförmige dotierte Elektrode (75) herstellt, indem ein in einer Schicht (95) eines streifenförmigen Elektrodenvorläufers (73) enthaltenes aktives Material mit Alkalimetall dotiert wird, wobei die Elektrodenherstellungsvorrichtung (1) Folgendes umfasst:
einen Sensor (65), der ausgelegt ist, um eine Markierung (107, 107A, 107B) zu erfassen, die der Elektrodenvorläufer (73) aufweist;
mindestens einen Dotierungsbehälter (7, 205, 207), in dem eine Lösung aufbewahrt wird, die Alkalimetallionen enthält;
ein Förderelement (9, 11, 13, 15, 17, 19, 21, 23, 25, 27, 29, 31, 305, 307, 109, 311, 313, 315, 317, 119, 321, 323, 33, 35, 37, 39, 41, 43, 45), das ausgelegt ist, um den Elektrodenvorläufer (73) entlang einer durch den Dotierungsbehälter (7, 205, 207) verlaufenden Bahn zu befördern;
ein Gegenelektrodenelement (51, 52, 54), das im Dotierungsbehälter (7, 205, 207) untergebracht ist;
ein Verbindungselement (87, 89, 25, 29, 91, 93, 307, 311, 97, 99, 317, 321), das ausgelegt ist, um den Elektrodenvorläufer (73) und das Gegenelektrodenelement (51, 52, 54) elektrisch zu verbinden;
eine Stromquelle (61, 62, 64), die ausgelegt ist, um über das Verbindungselement (87, 89, 25, 29, 91, 93, 307, 311, 97, 99, 317, 321) einen elektrischen Strom zum Gegenelektrodenelement (51, 52, 54) zu leiten;
eine Leistungssteuerung (66), die ausgelegt ist, um die Stromquelle (61, 62, 64) auf der Grundlage eines Erfassungsergebnisses des Sensors (65) zu steuern; sowie
Baugruppen, die jeweils den Dotierungsbehälter (7, 205, 207), das Gegenelektrodenelement (51, 52, 54), das Verbindungselement (87, 89, 25, 29, 91, 93, 307, 311, 97, 99, 317, 321) sowie die Stromquelle (61, 62, 64) umfassen, wobei
die Leistungssteuerung (66) ausgelegt ist, um die Stromquelle (61, 62, 64) für jede der Baugruppen zu steuern,
**dadurch gekennzeichnet, dass**
die Leistungssteuerung (66) ausgelegt ist, um den Zeitpunkt zum Ein- und Ausschalten der Stromquelle (61, 62, 64) auf der Grundlage des Erfassungsergebnisses des Sensors (65) und der Fördergeschwindigkeit des Elektrodenvorläufers (73) zu steuern.

2. Elektrodenherstellungsvorrichtung (1) gemäß Anspruch 1, wobei
die Markierung (107A, 107B) an Positionen vorgesehen ist, die eine Startposition und eine Endposition in Längsrichtung eines Abschnitts des Elektrodenvorläufers (73) angeben, in dem die das aktive Material enthaltende Schicht (95) nicht ausgebildet ist.

3. Elektrodenherstellungsvorrichtung (1) gemäß Anspruch 2, wobei
die an der die Startposition anzeigenden Position vorgesehene Markierung (107A) und die an der die Endposition anzeigenden Position vorgesehene Markierung (107B) an unterschiedlichen Stellen in einer Breitenrichtung des Elektrodenvorläufers (73) vorgesehen sind.

4. Elektrodenherstellungsvorrichtung (1) gemäß einem der Ansprüche 1 bis 3, wobei
die Markierung (107, 107A, 107B) so vorgesehen ist, dass sie einem Abschnitt des Elektrodenvorläufers (73) entspricht, an dem die das aktive Material enthaltende Schicht (95) nicht ausgebildet ist.

5. Elektrodenherstellungsvorrichtung (1) gemäß einem der Ansprüche 1 bis 4, wobei
das Förderelement (9, 11, 13, 15, 17, 19, 21, 23, 25, 27, 29, 31, 305, 307, 109, 311, 313, 315, 317, 119, 321, 323, 33, 35, 37, 39, 41, 43, 45) eine leitfähige Förderrolle (25, 29, 307, 311, 317, 321) umfasst, und
die leitfähige Förderrolle (25, 29, 307, 311, 317, 321) Teil des Verbindungselements (87, 89, 25, 29, 91, 93, 307, 311, 97, 99, 317, 321) ist.

6. Elektrodenherstellungsvorrichtung (1) gemäß einem der Ansprüche 1 bis 5, wobei
die Leistungssteuerung (66) ausgelegt ist, um einen Stromwert in der Stromquelle (61, 62, 64) auf der Grundlage des Erfassungsergebnisses des Sensors (65) und einer Fördergeschwindigkeit des Elektrodenvorläufers (73) zu steuern.

7. Elektrodenherstellungsverfahren zur Herstellung einer streifenförmigen dotierten Elektrode (75) durch Dotierung eines in einer Schicht eines streifenförmigen Elektrodenvorläufers (73) enthaltenen aktiven Materials mit Alkalimetall, wobei das Elektrodenherstellungsverfahren folgende Schritte umfasst:
das Befördern des Elektrodenvorläufers (73) entlang einer Bahn, die durch mindestens einen Dotierungsbehälter (7, 205, 207) verläuft, in dem eine Lösung mit Alkalimetallionen und ein Gegenelektrodenelement (51, 52, 54) aufbewahrt ist;
das elektrische Verbinden des Elektrodenvorläufers (73) mit dem Gegenelektrodenelement (51, 52, 54);
Leitung eines elektrischen Stroms zum Gegenelektrodenelement (51, 52, 54) über einen Verbinder (87, 89, 25, 29, 91, 93, 307, 311, 97, 99, 317, 321) unter Verwendung einer Stromquelle (61, 62, 64);
Erfassen einer Markierung (107, 107A, 107B), die der Elektrodenvorläufer (73) aufweist, unter Verwendung eines Sensors (65); und
Steuerung der Stromquelle (61, 62, 64) auf der Grundlage eines Erfassungsergebnisses des Sensors (65),
**dadurch gekennzeichnet, dass**
ein Zeitpunkt zum Ein- und Ausschalten der Stromquelle (61, 62, 64) auf der Grundlage des Erfassungsergebnisses des Sensors (65) und einer Fördergeschwindigkeit des Elektrodenvorläufers (73) gesteuert wird.

8. Elektrodenherstellungsverfahren gemäß Anspruch 7, wobei
der Dotierungsbehälter (7, 205, 207) die Dotierungsbehälter (7, 205, 207) umfasst,
der Elektrodenvorläufer (73) entlang des Weges befördert wird, der nacheinander durch die Dotierungsbehälter (7, 205, 207) führt, und
die Stromquelle (61, 62, 64) für jeden der Dotierungsbehälter (7, 205, 207) gesteuert wird.

9. Elektrodenherstellungsverfahren gemäß Anspruch 7 oder 8, wobei
die Markierung (107A, 107B) an Positionen vorgesehen ist, die eine Startposition und eine Endposition in Längsrichtung eines Abschnitts des Elektrodenvorläufers (73) angeben, in dem die das aktive Material enthaltende Schicht (95) nicht ausgebildet ist.

10. Elektrodenherstellungsverfahren gemäß Anspruch 9, wobei
die an der Position, die die Startposition anzeigt, vorgesehene Markierung (107A) und die an der Position, die die Endposition anzeigt, vorgesehene Markierung (107B) an unterschiedlichen Positionen in einer Breitenrichtung des Elektrodenvorläufers (73) vorgesehen sind.

11. Elektrodenherstellungsverfahren gemäß einem der Ansprüche 7 bis 10, wobei
die Markierung (107, 107A, 107B) so vorgesehen ist, dass sie einem Abschnitt des Elektrodenvorläufers (73) entspricht, an dem die das aktive Material enthaltende Schicht (95) nicht ausgebildet ist.

12. Elektrodenherstellungsverfahren gemäß einem der Ansprüche 7 bis 11, wobei
eine leitfähige Förderrolle (25, 29, 307, 311, 317, 321) zum Fördern des Elektrodenvorläufers (73) verwendet wird.

13. Elektrodenherstellungsverfahren gemäß einem der Ansprüche 7 bis 12, wobei
ein Stromwert in der Stromquelle (61, 62, 64) auf der Grundlage des Erfassungsergebnisses des Sensors (65) und einer Fördergeschwindigkeit des Elektrodenvorläufers (73) gesteuert wird.

## Revendications

1. Appareil de fabrication d'électrodes (1) destiné à fabriquer une électrode dopée en forme de bande (75) en dopant avec un métal alcalin une matière active contenue dans une couche (95) d'un précurseur d'électrode en forme de bande (73), ledit appareil de fabrication d'électrodes (1) comprenant :
un capteur (65) configuré pour détecter une marque (107, 107A, 107B) présent sur le précurseur d'électrode (73) ;
au moins un réservoir de dopage (7, 205, 207) conservant une solution contenant d'ions de métal alcalin ;
un élément convoyeur (9, 11, 13, 15, 17, 19, 21, 23, 25, 27, 29, 31, 305, 307, 109, 311, 313, 315, 317, 119, 321, 323, 33, 35, 37, 39, 41, 43, 45) configuré pour transporter le précurseur d'électrode (73) le long d'un trajet passant par le réservoir de dopage (7, 205, 207) ;
un élément de contre-électrode (51, 52, 54) logé dans le réservoir de dopage (7, 205, 207) ;
un connecteur (87, 89, 25, 29, 91, 93, 307, 311, 97, 99, 317, 321) configuré pour relier électriquement le précurseur d'électrode (73) et l'élément de contre-électrode (51, 52, 54) ;
une source d'alimentation (61, 62, 64) configurée pour faire circuler un courant électrique vers l'élément de contre-électrode (51, 52, 54) via le connecteur (87, 89, 25, 29, 91, 93, 307, 311, 97, 99, 317, 321) ;
un contrôleur de puissance (66) configuré pour commander la source d'alimentation (61, 62, 64) en fonction d'un résultat de la détection effectuée par le capteur (65) ; et
des ensembles comprenant chacun le réservoir de dopage (7, 205, 207), l'élément de contre-électrode (51, 52, 54), le connecteur (87, 89, 25, 29, 91, 93, 307, 311, 97, 99, 317, 321) et la source d'alimentation (61, 62, 64), dans lequel
le contrôleur de puissance (66) est configuré pour commander la source d'alimentation (61, 62, 64) pour chacun des ensembles,
**caractérisé en ce que**
le contrôleur de puissance (66) est configuré pour commander un moment de la mise sous tension et hors tension de la source d'alimentation (61, 62, 64) en fonction du résultat de la détection effectuée par le capteur (65) et de la vitesse de transport du précurseur d'électrode (73).

2. Appareil de fabrication d'électrodes (1) selon la revendication 1, dans lequel
la marque (107A, 107B) est prévue à des positions indiquant une position de départ et une position de fin dans un sens longitudinal d'une partie du précurseur d'électrode (73) sur laquelle la couche (95) contenant le matériau actif n'est pas formée.

3. Appareil de fabrication d'électrodes (1) selon la revendication 2, dans lequel
la marque (107A) prévue à la position indiquant la position de départ et la marque (107B) prévue à la position indiquant la position de fin sont prévues à des positions différentes dans un sens de la largeur du précurseur d'électrode (73).

4. Appareil de fabrication d'électrodes (1) selon l'une quelconque des revendications 1 à 3, dans lequel
la marque (107, 107A, 107B) est prévue pour correspondre à une partie du précurseur d'électrode (73) où la couche (95) contenant le matériau actif n'est pas formée.

5. Appareil de fabrication d'électrodes (1) selon l'une quelconque des revendications 1 à 4, dans lequel
l'élément convoyeur (9, 11, 13, 15, 17, 19, 21, 23, 25, 27, 29, 31, 305, 307, 109, 311, 313, 315, 317, 119, 321, 323, 33, 35, 37, 39, 41, 43, 45) comprend un rouleau de convoyeur conducteur (25, 29, 07, 311, 317, 321), et
le rouleau de convoyeur conducteur (25, 29, 307, 311, 317, 321) fait partie du connecteur (87, 89, 25, 29, 91, 93, 307, 311, 97, 99, 317, 321).

6. Appareil de fabrication d'électrodes (1) selon l'une quelconque des revendications 1 à 5, dans lequel
le contrôleur de puissance (66) est configuré pour commander une valeur du courant dans la source d'alimentation (61, 62, 64), en fonction du résultat de la détection effectuée par le capteur (65) et d'une vitesse de transport du précurseur d'électrode (73).

7. Procédé de fabrication d'électrodes pour fabriquer une électrode dopée en forme de bande (75) en dopant avec un métal alcalin un matériau actif contenu dans une couche d'un précurseur d'électrode en forme de bande (73), le procédé de fabrication d'électrodes comprenant :
le transport du précurseur d'électrode (73) le long d'un trajet passant par au moins un réservoir de dopage (7, 205, 207) contenant une solution d'ions de métal alcalin et un élément de contre-électrode (51, 52, 54) ;
la connexion électrique du précurseur d'électrode (73) et de l'élément de contre-électrode (51, 52, 54) ;
la circulation d'un courant électrique à l'élément de contre-électrode (51, 52, 54) via un connecteur (87, 89, 25, 29, 91, 93, 307, 311, 97, 99, 317, 321) en utilisant une source d'alimentation (61, 62, 64) ;
la détection, en utilisant un capteur (65), de la présence d'une marque (107, 107A, 107B) sur le précurseur d'électrode (73) ; et
la commande de la source d'alimentation (61, 62, 64) en fonction du résultat de la détection effectuée par le capteur (65),
**caractérisé en ce que**
un moment de la mise sous tension ou hors tension de la source d'alimentation (61, 62, 64) est commandé en fonction du résultat de la détection effectuée par le capteur (65) et d'une vitesse de transport du précurseur d'électrode (73).

8. Procédé de fabrication d'électrodes selon la revendication 7, dans lequel
le réservoir de dopage (7, 205, 207) comprend les réservoirs de dopage (7, 205, 207),
le précurseur d'électrode (73) est transporté le long du trajet passant successivement par les réservoirs de dopage (7, 205, 207), et
la source d'alimentation (61, 62, 64) est commandée pour chacune des réservoirs de dopage (7, 205, 207).

9. Procédé de fabrication d'électrodes selon la revendication 7 ou 8, dans lequel
la marque (107A, 107B) est prévue à des positions indiquant une position de départ et une position de fin dans une direction longitudinale d'une partie du précurseur d'électrode (73) où la couche (95) contenant le matériau actif n'est pas formée.

10. Procédé de fabrication d'électrodes selon la revendication 9, dans lequel
la marque (107A) prévue à la position indiquant la position de départ et la marque (107B) prévue à la position indiquant la position de fin sont prévues à des positions différentes dans un sens de la largeur du précurseur d'électrode (73).

11. Procédé de fabrication d'électrodes selon l'une quelconque des revendications 7 à 10, dans lequel
la marque (107, 107A, 107B) est prévue pour correspondre à une partie du précurseur d'électrode (73) où la couche (95) contenant le matériau actif n'est pas formée.

12. Procédé de fabrication d'électrodes selon l'une quelconque des revendications 7 à 11, dans lequel
un rouleau de convoyeur conducteur (25, 29, 307, 311, 317, 321) est utilisé pour transporter le précurseur d'électrode (73).

13. Procédé de fabrication d'électrode selon l'une quelconque des revendications 7 à 12, dans lequel
une valeur de courant dans la source d'alimentation (61, 62, 64) est commandée en fonction du résultat de la détection effectuée par le capteur (65) et une vitesse de transport du précurseur d'électrode (73).
